# EUROPÄISCHE PATENTANMELDUNG

(11) **EP 4 603 300 A1**
(43) Veröffentlichungstag der Anmeldung: **20.08.2025**
(21) Anmeldenummer: 24158185.9
(22) Anmeldetag: 16.02.2024
(51) Int. Cl.: B60B 27/06, B60B 35/02, B60B 37/04, B60K 25/08, F16D 1/076

(54) **NUTZFAHRZEUGACHSE ZUM ANTRIEB EINES GENERATORS UND NUTZFAHRZEUG MIT NUTZFAHRZEUGACHSE**

(71) Anmelder: Schmitz Cargobull AG, 48341 Altenberge (DE)
(72) Erfinder: SCHLICHTING, Timo, 48429 Rheine (DE); FOERSTER, Marvin, 48161 Münster (DE); MAYENFELS, Peter, 48165 Münster (DE)
(74) Vertreter: Cohausz & Florack

(57) **Zusammenfassung**

Beschrieben und dargestellt ist eine Nutzfahrzeugachse (10) insbesondere eines Lastkraftwagens, Anhängers oder Sattelaufliegers, zum Antrieb eines Generators (15) mit einer Antriebswelle (18) zum Antrieb des Generators (15), mit einem Achskörper (17) zur wenigstens abschnittsweisen Aufnahme der Antriebswelle (18) und mit einem Radmontageelement (16) zur Montage eines nicht angetriebenen Rads (11), wobei das Radmontageelement (16) derart mit der Antriebswelle (18) verbunden ist, so dass die Antriebswelle (18) durch eine Drehung des Radmontageelements (16) antreibbar ist. Damit Beschädigungen möglichst vermieden werden können, ist vorgesehen, dass das Radmontageelement (16) in wenigstens einer Drehrichtung über wenigstens ein Dämpfungselement torsionselastisch mit der Antriebswelle (18) verbunden ist.

## Beschreibung

Die Erfindung betrifft eine Nutzfahrzeugachse, insbesondere eines Lastkraftwagens, Anhängers oder Sattelaufliegers, zum Antrieb eines Generators mit einer Antriebswelle zum Antrieb des Generators, mit einem Achskörper zur wenigstens abschnittsweisen Aufnahme der Antriebswelle und mit einem Radmontageelement zur Montage eines nicht angetriebenen Rads, wobei das Radmontageelement derart mit der Antriebswelle verbunden ist, so dass die Antriebswelle durch eine Drehung des Radmontageelements antreibbar ist. Ferner betrifft die Erfindung ein Nutzfahrzeug, insbesondere Lastkraftwagen, Anhänger oder Sattelauflieger, mit wenigstens einer Nutzfahrzeugachse, wobei an den gegenüberliegenden Enden der Nutzfahrzeugachse jeweils ein Radmontageelement vorgesehen ist und dass das Radmontageelement mit wenigstens einem Rad verbunden ist.

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge meist unterschiedliche Arten von Aufbauten auf, die einen Laderaum umgrenzen, welcher der Aufnahme der zu transportierenden Ladung dient.

So sind beispielsweise sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten beladen zu können. Wenn die wenigstens eine Plane entlang der Seitenwand verschoben werden kann, spricht man auch von sogenannten Curtainsidern. Neben Planenaufbauten sind sogenannte Kofferaufbauten bekannt. Wie bei Planenaufbauten ist bei Kofferaufbauten die Stirnwand meist als feste Wand ausgebildet und die Rückwand regelmäßig durch zwei Flügeltüren gebildet. Im Gegensatz zu Planenaufbauten sind bei Kofferaufbauten allerdings die Seitenwände und das Dach durch feste Wände verschlossen. Die Seitenwände, das Dach und die Stirnwand sowie bedarfsweise der Boden von Kofferaufbauten sind meist durch Paneele gebildet, die äußere strukturgebende Decklagen und dazwischen eine Kernlage aus geschäumtem Kunststoff umfassen.

Unabhängig von der Art des Aufbaus weisen Nutzfahrzeuge ein Chassis und wenigstens eine daran befestigte Nutzfahrzeugachse auf, die mit Rädern zum Bewegen des Nutzfahrzeugs verbunden ist. Zur Befestigung der Räder an der Nutzfahrzeugachse weist die Nutzfahrzeugachse für gewöhnlich an ihren gegenüberliegenden Längsenden jeweils ein Radmontageelement auf, bei dem es sich um einen sogenannten Radkopf handeln kann. Die Radmontageelemente sind typischerweise drehbar an der Nutzfahrzeugachse gelagert, sodass ein Abrollen der an den Radmontageelementen befestigten Räder möglich ist. Diese Räder sind grundsätzlich selbst nicht angetrieben.

Moderne Nutzfahrzeuge weisen zudem häufig eine Vielzahl an elektrischen Komponenten auf, die im Betrieb mit elektrischer Energie zu versorgen sind. So kann beispielsweise eine Transportkältemaschine elektrisch betrieben sein oder eine mit elektrischer Energie zu versorgende Telematikeinrichtung zur Kommunikation mit einer von dem Nutzfahrzeug entfernten Zentrale vorgesehen sein. Dabei besteht der Bedarf, elektrische Komponenten des Nutzfahrzeugs - unabhängig von dem die Antriebsleistung zum Bewegen des Nutzfahrzeugs bereitstellenden Fahrzeugmotor - mit elektrischer Energie zu versorgen. Dies kann durch sogenannte Generatorachsen erfolgen, bei denen ein nicht angetriebenes Rad über das Radmontageelement mit einer Antriebswelle verbunden ist. Das nicht angetriebene Rad überträgt so während der Fahrt eine Drehbewegung auf die Antriebswelle, die ihrerseits einen Generator antreibt. Um die Drehzahl der Antriebswelle in eine geeignete Drehzahl zum Betrieb des Generators umsetzen zu können, kann zwischen der Antriebswelle und dem Generator ein Getriebe vorgesehen sein. Zum Schutz der Antriebswelle ist diese überwiegend in einem Hohlraum eines Achskörpers aufgenommen. Der Einfachheit halber bietet es sich dabei an, wenn das Getriebe und der Generator fest mit der Achse und an derselben verbaut sind, wie dies beispielsweise in der EP 4 206 018 A1 beschrieben ist.

Nutzfahrzeugachsen der genannten Art sind aufgrund ihres komplexeren Aufbaus weniger robust als gewöhnliche Nutzfahrzeugachsen, die nicht zum Antrieb eines Generators während der Fahrt vorgesehen sind. Es kommt daher öfter zu einer Beschädigung der Nutzfahrzeugachse, insbesondere im Bereich der Verbindung zwischen dem Radmontageelement und der Antriebswelle.

Daher liegt der vorliegenden Erfindung die Aufgabe zugrunde, die Nutzfahrzeugachse und das Nutzfahrzeug jeweils der eingangs genannten und zuvor näher beschriebenen Art derart auszugestalten und weiterzubilden, dass Beschädigungen möglichst vermieden werden können.

Diese Aufgabe ist bei einer Nutzfahrzeugachse nach dem Oberbergriff von Anspruch 1 dadurch gelöst, dass das Radmontageelement in wenigstens einer Drehrichtung über wenigstens ein Dämpfungselement torsionselastisch mit der Antriebswelle verbunden ist.

Die genannte Aufgabe ist zudem bei einem Nutzfahrzeug nach dem Oberbegriff von Anspruch 14 dadurch gelöst, dass die Nutzfahrzeugachse nach einem der Ansprüche 1 bis 13 ausgebildet ist.

Durch die Verwendung wenigstens eines Dämpfungselements zwischen dem Radmontageelement und der Antriebswelle, können Drehmomentstöße gedämpft werden und kann die Antriebswelle so gegenüber Beschädigungen geschützt werden. Es hat sich überraschend gezeigt, dass aus diesem Grund keine mechanische Stabilisierung der Verbindung zwischen dem Radmontageelement und der Antriebswelle und/oder der Antriebswelle selbst durch eine massivere Ausgestaltung erforderlich ist, die zu einem erhöhten Materialeinsatz und den damit verbundenen Kosten sowie dem damit einhergehenden höheren Gewicht führen würde. Die Langlebigkeit der Nutzfahrzeugachse kann erfindungsgemäß also auf eine einfache und kostengünstige Art und Weise deutlich gesteigert werden. Dies ist von besonderem Vorteil für den Betrieb des Nutzfahrzeugs, da Ausfälle und Reparaturzeiten vermieden werden.

Unter einem Drehmomentstoß, der auch als Torsionsstoß bezeichnet werden kann, wird vorliegend insbesondere ein deutlicher Anstieg des Drehmoments in einer sehr kurzen Zeitspanne verstanden. Die Zeitspanne kann hierbei im Bereich von Bruchteilen einer Sekunde liegen. Die Drehmomente können dabei um etwa 5000 Nm ansteigen. Ein solch deutlicher Anstieg des auf die Antriebswelle übertragenen Drehmoments kann zu einem Bruch der Antriebswelle führen, wenn die Antriebswelle solchen Drehmomentstößen sehr oft ausgesetzt wird. Das Radmontageelement ist dabei typischerweise ohnehin so stabil ausgebildet, dass das Radmontageelement wider Erwarten nicht gegen solche Drehmomentstöße geschützt werden muss.

Das Radmontageelement und die Antriebswelle sind wenigstens in einer Drehrichtung torsionselastisch miteinander verbunden. In dieser Drehrichtung werden dann Drehmomentstöße überwiegend oder ausschließlich zu erwarten sein. Um jedoch Drehmomentstößen in entgegengesetzten Drehrichtungen Rechnung tragen zu können und die Antriebswelle weiter gegenüber einer Beschädigung zu schützen, kann es sich anbieten, wenn das Radmontageelement in zwei entgegengesetzten Drehrichtungen jeweils über wenigstens ein Dämpfungselement torsionselastisch mit der Antriebswelle verbunden ist. Es kann sich bei dem jeweils wenigstens einen Dämpfungselement dann um dasselbe Dämpfungselement handeln. Bevorzugt kann es aber aus konstruktiver Sicht sein, wenn wenigstens ein Dämpfungselement einen Drehmomentstoß in die eine Drehrichtung dämpft, während wenigstens ein anderes Dämpfungselement einen Drehmomentstoß in die entgegengesetzte Drehrichtung dämpft.

Durch die Dämpfung des Drehmomentstoßes und der damit einhergehenden Torsionsspitzen zwischen dem Radmontageelement und der Antriebswelle wird der auf die Antriebswelle übertragene Anstieg des Drehmoments insgesamt abgeschwächt oder jedenfalls über einen längeren Zeitraum gestreckt. Mithin ist die Belastung auf die Antriebswelle deutlich geringer als ohne die entsprechende Dämpfung. Wenn das Drehmoment dauerhaft ansteigt, dann wird das Drehmoment nur anfänglich gedämpft. Nach einem anfänglichen Dämpfen des Drehmoments wird dieses im vollen Umfang von dem Radmontageelement auf die Antriebswelle übertragen. Bei der Übertragung eines wenigstens in etwa gleichbleibenden Drehmoments treten auch keine oder nur geringe Torsionsspitzen auf, die zu einer hohen mechanischen Beanspruchung der Antriebswelle führen können.

Ein entsprechender Drehmomentstoß kann während der Fahrt des Nutzfahrzeugs auftreten und durch Fahrbahnunebenheiten ausgelöst werden. Die Nutzfahrzeugsachse ist schwenkbar gegenüber einem Chassis des Nutzfahrzeugs abgestützt und federt beim Überfahren von Fahrbahnunebenheiten ein, dabei treten in kurzer Zeit hohe Kräfte auf, die zu einem heftigen ruckartigen Schwenken der Nutzfahrzeugachse gegenüber dem Chassis des Nutzfahrzeugs führen. Die Schwenkachse der Nutzfahrzeugachse ist dabei wenigstens im Wesentlichen parallel zur Drehachse und Längsachse der Antriebswelle ausgerichtet. Infolgedessen kann durch ein sehr rasches, starkes Einfedern der Nutzfahrzeugachse ein heftiger Drehmomentstoß mit hohen Torsionsspitzen auf die Antriebswelle übertragen werden, wenn dieser Drehmomentstoß nicht durch ein Dämpfungselement gedämpft wird.

Der besseren Verständlichkeit halber und zur Vermeidung von unnötigen Wiederholungen werden nachfolgend die Nutzfahrzeugachse und das Nutzfahrzeug gemeinsam beschrieben, ohne jeweils im Einzelnen zwischen der Nutzfahrzeugachse und dem Nutzfahrzeug zu unterscheiden. Für den Fachmann ergibt sich aber dennoch anhand des Kontextes, welches Merkmal jeweils hinsichtlich der Nutzfahrzeugachse und/oder des Nutzfahrzeugs besonders bevorzugt ist.

Bei einer ersten besonders bevorzugten Ausgestaltung der Nutzfahrzeugachse kann wenigstens ein Dämpfungselement verwendet werden, das sich zwischen einer Ausgangsstellung und wenigstens einer Dämpfungsstellung verstellen oder elastisch verformen lässt. Auf diese Weise kann die Nutzfahrzeugachse einfach und kostengünstig ausgebildet werden, ohne funktionale Einschränkungen in Kauf nehmen zu müssen. Die zum Verstellen oder zum Verformen benötigte Energie dämpft einen etwaigen Drehmomentstoß, so dass das Drehmoment vom Randmontageelement nicht unmittelbar in vollem Umfang auf die Antriebswelle übertragen werden kann, sondern allenfalls zeitversetzt. Ein verstellbares Dämpfungselement kann beispielsweise ein prinzipiell aus dem Fahrzeugbau bekannter Stoßdämpfer oder eine Gasdruckfeder sein. Solche Dämpfungselemente sind jedoch teuer und erfordern einen größeren Bauraum, so dass diese Dämpfungselemente nur in bestimmten Fällen bevorzugt sein werden. Elastisch verformbare Dämpfungselemente können klein ausgebildet werden und trotzdem eine hohe Verformungsenergie aufnehmen. Dabei können Materialien mit einem geeigneten Elastizitätsmodul ebenso verwendet werden wie Bauteile mit einer geeigneten Form, um Verformungsenergie in zweckmäßiger Weise und in zweckmäßigem Umfang aufzunehmen.

Besonders einfach, zweckmäßig und gut einstellbar ist wenigstens ein Dämpfungselement in Form eines Federelements. Aus Platzgründen kommt dabei insbesondere wenigstens eine Blattfeder oder wenigstens eine Tellerfeder in Frage. Denkbar ist auch die Verwendung von wenigstens einer Schraubenfeder. Noch zweckmäßiger kann es zur Bereitstellung einer hinreichenden Dämpfung eines Drehmomentstoßes sein, wenn das wenigstens eine Dämpfungselement als Blatt- oder Tellerfederpaket ausgebildet ist.

Alternativ oder zusätzlich zu wenigstens einem Federelement kann das wenigstens eine Dämpfungselement auch wenigstens einen wenigstens indirekt zwischen Radmontageelement und Antriebswelle elastisch verformbaren Kunststoff aufweisen. Durch die Verformung des Kunststoffs wird dann ein Teil des Drehmomentstoßes abgebaut, bevor dieser auf die Antriebswelle übertragen wird. Dabei kann das wenigstens eine Dämpfungselement in Form einer Buchse, eines Ringes und/oder eines Blocks ausgebildet sein, damit für eine hinreichende Dämpfung nur ein geringer Bauraum benötigt wird. Anstelle oder zusätzlich zu dem elastisch verformbaren Kunststoff kann auch Gummi verwendet werden.

Eine einfache und zugleich effektive Dämpfung von Drehmomentstößen kann erreicht werden, wenn das Radmontageelement und die Antriebswelle jeweils wenigstens eine Anlagefläche zur Anlage an das wenigstens eine Dämpfungselement aufweisen. Dabei ist es besonders zweckmäßig, wenn die Anlagen von Radmontageelement und Antriebswelle jeweils auf wenigstens im Wesentlichen gegenüberliegenden Seiten des Dämpfungselements angeordnet sind. Auf diese Weise kann das Dämpfungselement zwischen den Anlageflächen von Radmontageelement und Antriebswelle verformt werden, wenn ein Drehmomentstoß wenigstens in eine Drehrichtung auftritt, um Verformungsenergie aufzunehmen und so den Anstieg des Drehmoments abzuflachen.

Für eine kompakte Bauweise bietet es sich zudem an, wenn die wenigstens eine Anlagefläche der Antriebswelle und/oder des Radmontageelements sich wenigstens im Wesentlichen in radialer Richtung zur Antriebswelle erstrecken. So kann die Verbindung ohne eine Aufweitung der Antriebswelle in Kauf nehmen zu müssen in den Bereich des Radmontageelements verlegt werden, wo in radialer Richtung mehr Bauraum zur Verfügung steht als im Bereich des Achskörpers. Konstruktiv kann dies einfach ermöglicht werden, indem die wenigstens eine Anlagefläche der Antriebswelle von wenigstens einem Fingerelement bereitgestellt wird, das sich wenigstens im Wesentlichen in radialer Richtung zur Antriebswelle nach außen erstreckt. Auf eine exakt radiale Ausrichtung des Fingerelements kommt es nicht zwingend an, kann aber der Einfachheit halber bevorzugt sein. Das Dämpfungselement kann dann im Bereich des Radmontageelements radial nach außen verlagert werden, ohne dafür nennenswert Bauraum bereitstellen oder die grundsätzliche Konstruktion des Achskörpers ändern zu müssen.

Um die Dämpfung auf mehrere Dämpfungselemente aufteilen zu können und damit eine definierte und zuverlässige Dämpfung sicherzustellen, kann die Antriebswelle eine Mehrzahl von Fingerelementen aufweisen, die sich in einer besonders einfachen und platzsparenden Weise gegenüber der Antriebswelle wenigstens im Wesentlichen sternförmig nach außen erstrecken. Die Dämpfungselemente können dann mehr oder weniger gleichmäßig über den Umfang der Antriebswelle bzw. des Radmontageelements verteilt werden.

Das wenigstens eine Dämpfungselement kann zwischen zwei Fingerelementen vorgesehen sein. So lassen sich dann einfach und effektiv Drehmomentstöße in entgegengesetzte Drehrichtungen der Antriebswelle dämpfen. Im Falle von mehreren Dämpfungselementen können diese vorzugsweise jeweils zwischen zwei Fingerelementen der Antriebswelle vorgesehen sein, etwa um die Dämpfung über den Umfang der Antriebswelle bzw. des Radmontageelements zu verteilen. Aus konstruktiver Sicht ist es dabei besonders einfach und zuverlässig, wenn das wenigstens eine Dämpfungselement zwischen jeweils zwei Fingerelementen am Radmontageelement gehalten ist. Die Verbindung von Dämpfungselement und Radmontageelement kann dabei einfach formschlüssig erfolgen, was auch die Fertigung der Nutzfahrzeugachse vereinfachen kann.

Aus Gründen des zur Verfügung stehenden Bauraums bietet es sich an, wenn das wenigstens eine Dämpfungselement zwischen einem Flanschabschnitt des Radmontageelements und einem Deckel des Radmontageelements aufgenommen ist. In diesem Fall kann es sich aus konstruktiven und aus Gründen des Bauraums anbieten, wenn auch das wenigstens eine Fingerelement zwischen einem Flanschabschnitt des Radmontageelements und einem Deckel des Radmontageelements aufgenommen ist. Durch die entsprechende Kapselung kann auch ein Eindringen von Schmutz und Feuchtigkeit vermieden werden.

Die Steifigkeit des wenigstens einen Dämpfungselements kann so eingestellt werden, dass eine Dämpfung von Drehmomentstößen nur dann auftritt, wenn der Drehmomentanstieg, insbesondere der Drehmomentanstieg pro Zeiteinheit so groß ist, dass eine Dämpfung wünschenswert ist. Ansonsten kann die torsionselastische Verbindung zwischen dem Radmontageelement und der Antriebswelle auf die Dauer zu sehr beansprucht werden und Schaden nehmen. Bei geringeren Drehmomentstößen kann sich die Verbindung zwischen dem Radmontageelement und der Antriebswelle quasi torsionssteif verhalten. Zweckmäßige Steifigkeiten des wenigstens einen Dämpfungselements, die noch keine elastische Verformung oder Verstellung des wenigstens einen Dämpfungselements bewirken, können zwischen 0,01 kN/mm und 200 kN/mm, vorzugsweise zwischen 0,1 kN/mm und 100 kN/mm, insbesondere zwischen 0,7 kN/mm und 70 kN/mm, betragen.

Die zuvor diskutierten Vorteile der Nutzfahrzeugachse kommen insbesondere dann zum Tragen, wenn an dem wenigstens einen Radmontageelement, das auch als Radkopf bezeichnet werden kann, wenigstens ein Rad montiert ist. Dies kann besonders einfach und zweckmäßig bewerkstelligt werden, wenn das Radmontageelement einen Radflansch trägt, ab dem dann das Rad montiert werden kann. Zwischen dem Radmontageelement und dem Radflansch kann dann noch eine Bremsscheibe vorgesehen sein. Alternativ oder zusätzlich kann die Antriebswelle mit einer Getriebeeinheit verbunden sein, die Teil der Nutzfahrzeugachse ist. Auf diese Weise wird Bauraum und werden Kosten gespart. Insbesondere im Fall einer in die Nutzfahrzeugachse integrierten und mit der Antriebswelle gekoppelten Getriebeeinheit kann von der Nutzfahrzeugachse zusätzlich noch ein Generator umfasst sein. Es ist dann lediglich ein elektrischer Anschluss an die Nutzfahrzugachse erforderlich, um den vom Generator bereitgestellten elektrischen Strom an anderer Stelle des Nutzfahrzeugs zu nutzen oder in einem Akkumulator zu speichern.

Der Generator ist in diesem Falle mit dem Radmontageelement verbunden, sodass das Radmontageelement den Generator antreiben kann. So kann der Generator während der Fahrt des Nutzfahrzeugs durch die Drehbewegung des an dem Radmontageelement befestigten Rads des Nutzfahrzeugs angetrieben werden. Auf diese Weise kann unabhängig von dem Fahrzeugmotor in umweltfreundlicher Weise elektrische Energie zum Versorgen elektrischer Komponenten des Nutzfahrzeugs bereitgestellt werden. Dabei ergibt sich ein zusätzlicher Vorteil dadurch, dass bei Bremsvorgängen des Nutzfahrzeugs die Rotationsenergie des Rads rekuperiert und als elektrische Energie zur Verfügung gestellt werden kann.

Die Nutzfahrzeugachse kann eine Getriebeeinheit umfassen, um die Drehzahl des Radmontageelements in eine größere Drehzahl des Generators zu übersetzen. So wird trotz der bei Nutzfahrzeugen typischerweise verhältnismäßig kleinen Drehzahlen des Radmontageelements ermöglicht, dass der Generator bei geringer Baugröße eine hohe elektrische Leistung bereitstellt. Dabei ist mit der Drehzahl des Radmontageelements insbesondere die Drehzahl gemeint, mit der sich das Rad um die Raddrehachse dreht.

Die über den Generator bereitgestellte elektrische Energie kann beispielsweise zweckmäßig zum Betrieb einer Transportkältemaschine genutzt werden, welche einen Laderaum temperieren, insbesondere kühlen kann. Dies kann auch nur in bestimmten Situationen erfolgen, etwa solchen während des Stillstands des Nutzfahrzeugs. Dann bietet es sich an, die über den Generator während der Fahrt des Nutzfahrzeugs erzeugte elektrische Energie in einen Akkumulator zwischenzuspeichern.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug in einer perspektivischen Ansicht,
- Fig. 2: eine erfindungsgemäße Nutzfahrzeugachse des Nutzfahrzeugs aus Fig. 1 in einer perspektivischen, teilweise geschnittenen Ansicht,
- Fig. 3A-C: ein Detail der Nutzfahrzeugachse aus der Fig. 2 in einer perspektivischen Ansicht, einer Schnittansicht und einer Draufsicht ohne Deckel,
- Fig. 4: ein Detail einer weiteren erfindungsgemäßen Nutzfahrzeugachse in einer Draufsicht,
- Fig. 5A-B: ein Detail einer weiteren erfindungsgemäßen Nutzfahrzeugachse in einer Schnittansicht und einer Draufsicht und
- Fig. 6A-B: ein Detail einer weiteren erfindungsgemäßen Nutzfahrzeugachse in einer Schnittansicht und einer Draufsicht.

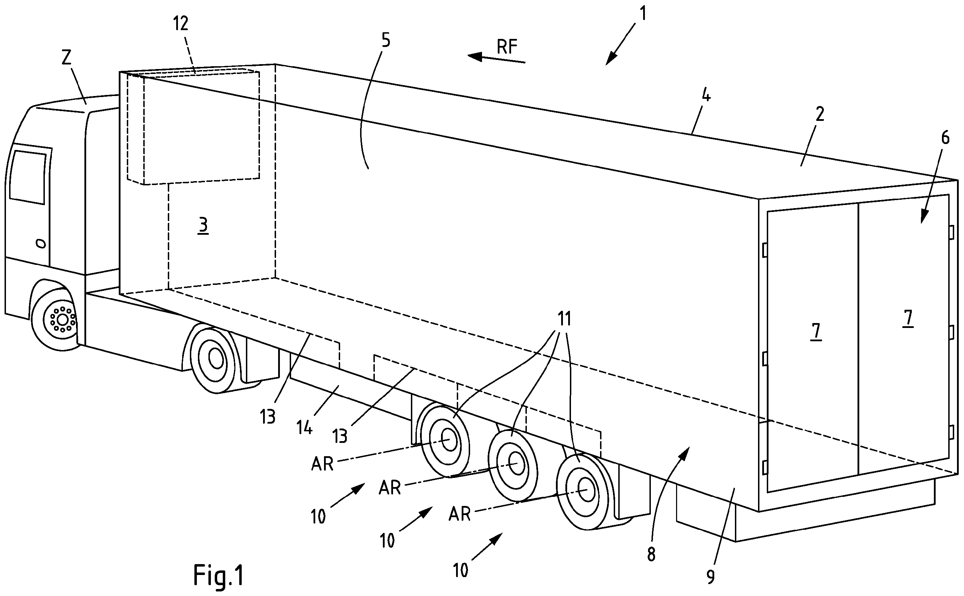

In der Fig. 1 ist ein Nutzfahrzeug 1 in Form eines Sattelaufliegers mit einem Nutzfahrzeugaufbau in Form eines Kofferaufbaus 1 in einer perspektivischen Ansicht dargestellt, das von einer Zugmaschine Z gezogen wird. Das Nutzfahrzeug N umfasst ein festes Dach 2, eine feste Stirnwand 3, zwei feste Seitenwände 4,5 und eine feste Rückwand 6, die im Wesentlichen durch zwei Flügeltüren 7 gebildet ist. Zudem umfasst das Nutzfahrzeug 1 einen Laderaum 8, der nach unten durch einen Ladeboden 9 begrenzt wird. Neben dem Kofferaufbau weist das Nutzfahrzeug N vorliegend ein nicht näher dargestelltes Chassis und drei hintereinander angeordnete, von dem Chassis gehaltene Nutzfahrzeugachsen 10 auf. An den Nutzfahrzeugachsen 10 sind jeweils zwei Räder 11 auf den gegenüberliegenden Längsseiten des Nutzfahrzeugs N um eine Raddrehachse AR drehbar befestigt.

An der Stirnwand 3 des Kofferaufbaus 1 ist eine Transportkältemaschine 12 montiert, die Luft aus dem Laderaum 8 ansaugt, temperiert und wieder zurück in den Laderaum 8 bläst. Die Transportkältemaschine 12 ist über eine elektrische Leitung 13 mit einem elektrischen Energiespeicher 14 in Form eines Akkumulators verbunden.

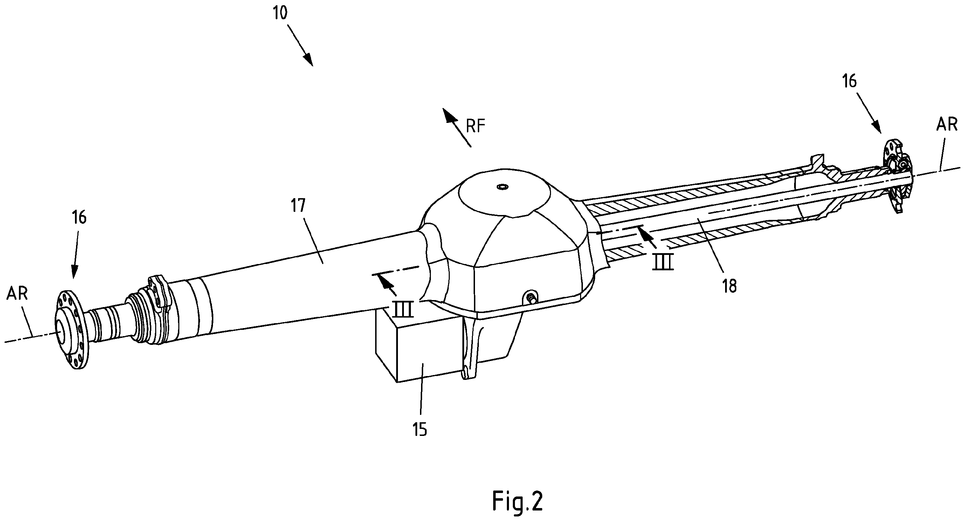

In der Fig. 2 ist eine der vorliegend gleichartig ausgebildeten Nutzfahrzeugachsen 10 dargestellt. Die Nutzfahrzeugachse 10 weist an ihren gegenüberliegenden Längsenden jeweils ein Radmontageelement 16 auf, an dem ein Rad 11 des Nutzfahrzeugs N beispielsweise über einen Radflansch befestigt sein kann. Dabei sind die Radmontageelemente 16 um die Raddrehachse AR drehbar gelagert. Zwischen den Radmontageelementen 16 erstreckt sich ein Achskörper 17 der Nutzfahrzeugachse 10, in dem weitere Komponenten der Nutzfahrzeugachse 10 aufgenommen sind. Zudem ist an dem Achskörper 17 der Generator 15 der Nutzfahrzeugachse 10 befestigt.

Der Generator 15 wandelt einen Teil der Rotationsenergie, die während der Fahrt des Nutzfahrzeugs N in das in Fahrtrichtung RF rechts angeordnete Rad 11 eingeleitet wird, in elektrische Energie um. Diese elektrische Energie wird über eine Leitung an den elektrischen Energiespeicher 14 weitergeleitet und dort zwischengespeichert. Anschließend kann die zwischengespeicherte elektrische Energie der Transportkältemaschine 12 zur Verfügung gestellt werden.

Das in Fahrtrichtung RF rechts angeordnete Radmontageelement 16, bei dem es sich um einen sogenannten Radkopf handeln kann, ist mit einer Antriebswelle 18 verbunden, die sich von dem Radmontageelement 16 zur Mitte der Nutzfahrzeugachse 10 erstreckt, und zwar längs zur Drehachse der Antriebswelle 18. Über die Antriebswelle 18 ist das Radmontageelement 16 mit dem Generator 15 verbunden, sodass die Drehbewegung des Radmontageelements 16 über die Antriebswelle 18 an den Generator 15 übertragen werden kann. Die Drehachse der Antriebswelle 18 ist dabei parallel zur Raddrehachse AR.

Die Antriebswelle 18 ist an dem von dem Radmontageelement 16 abgewandten Längsende mit einer Getriebeeinheit verbunden. Die Getriebeeinheit überträgt die Drehbewegung wiederum an ein um eine Generatordrehachse drehbar gelagertes Generatorkoppelelement 20. Das Generatorkoppelelement 20 überträgt die Drehbewegung schließlich auf eine Antriebswelle 21 des Generators 15, wodurch der Generator 15 angetrieben wird. Die Getriebeeinheit kann dabei auf unterschiedliche, an sich bekannte Weisen ausgebildet sein. Auf die konkrete Ausgestaltung der Getriebeeinheit kommt es vorliegend nicht oder allenfalls nur bedingt an.

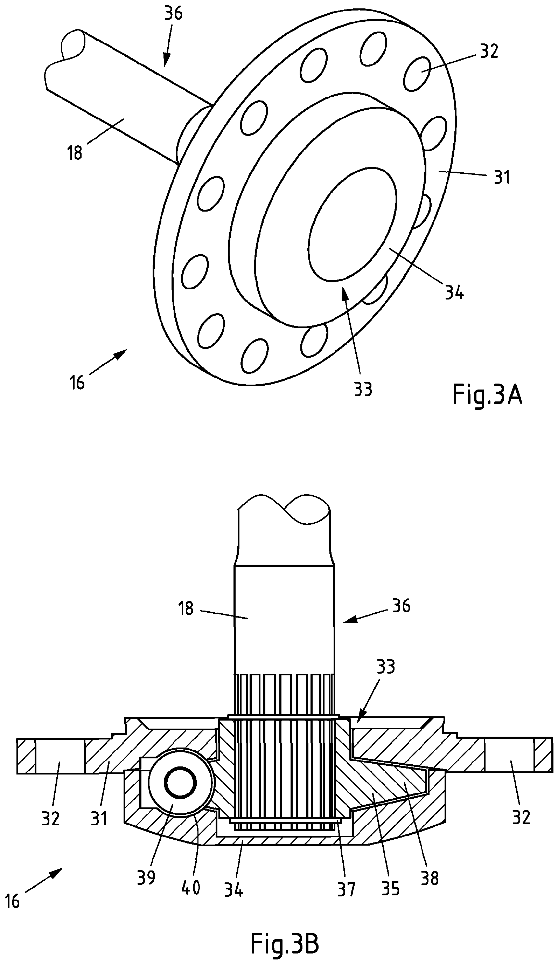

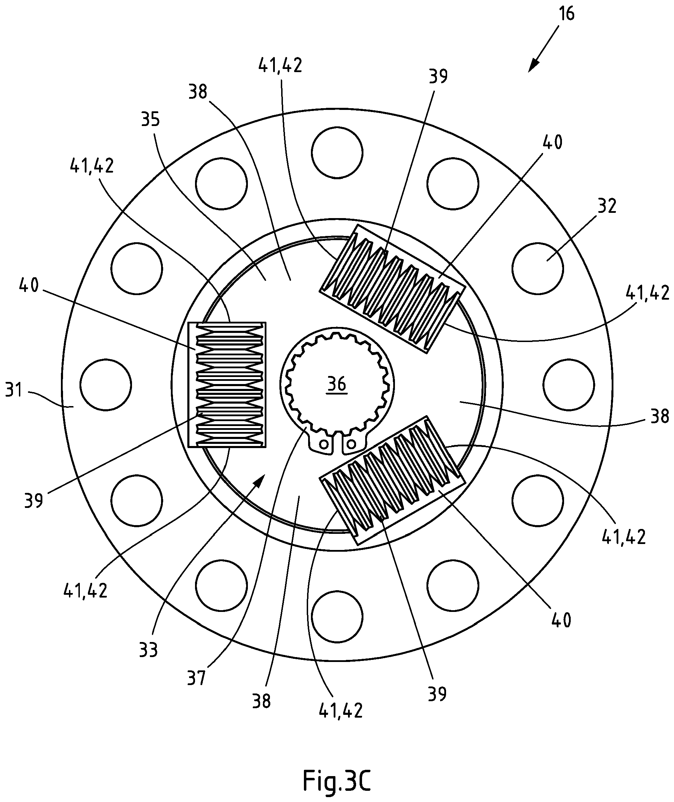

In den Fig. 3A-C ist ein Detail der Nutzfahrzeugachse 10 in unterschiedlichen Ansichten dargestellt. In der Fig. 3A ist die Antriebswelle 18 und das Radmontageelement 16 mit einem Flanschabschnitt 31 zum Anbinden weiterer Baugruppen wie insbesondere ein Radflansch und eine Scheibenbremse über umlaufend vorgesehene Öffnungen 32 dargestellt. Im zentralen Bereich 33 des Radmontageelements 16 ist mit dem Flanschabschnitt 31 ein Deckel 34 verbunden, insbesondere verschraubt. Ein Schnitt durch das äußere Ende der Antriebswelle 18 sowie dem Flanschabschnitt 31 und den Deckel 34 des Radmontageelements 16 ist in der Fig. 3B dargestellt. Am Ende der Antriebswelle 18 ist ein Kopfstück 35 aufgesetzt und in Umfangsrichtung formschlüssig mit dem Rest der Antriebswelle 18, insbesondere mit dem Schaftabschnitt 36 der Antriebswelle 18, verbunden. Das Kopfstück 35 ist ebenfalls in der Fig. 3C in einer Draufsicht dargestellt, die sich ergibt, wenn der Deckel 34 des Radmontageelements 16 abgenommen wird.

Das Kopfstück 35 ist bei der dargestellten und insoweit bevorzugten Antriebswelle 18 über einen Ring 37 gesichert und weist sich sternförmig nach außen erstreckende und umlaufend zur Antriebswelle vorgesehene Fingerelemente 38 angrenzend zu dem zentralen, vom Deckel 34 verschossenen Abschnitt des Radmontageelements 16 auf. Zwischen jeweils zwei Fingerelementen 38 sind Dämpfungselemente 39 in Form von Blattfederpaketen jeweils aus einer Mehrzahl von Blattfedern, bei denen es sich auch um Tellerfedern handeln kann, vorgesehen. Die Dämpfungselemente 39 werden dabei formschlüssig in Aufnahmeräumen 40 gehalten, die bei dem dargestellten und insoweit bevorzugten Radmontageelement 16 durch korrespondierende Aussparungen im Deckel 34 und im zentralen Bereich 33 des Radmontageelementes 16 gebildet sind. Die Dämpfungselemente 39 und die Fingerelemente 38 können mit korrespondierenden Anlageflächen 41,42 in Anlage aneinander kommen, jedenfalls wenn das Radmontageelement 16 und die Antriebswelle 18 in der Drehrichtung der Antriebswelle 18 oder entgegengesetzt dazu gegeneinander gedreht werden. Das Radmontageelement 16 weist auch eine Anlagefläche für das Dämpfungselement 39 auf.

Ein Drehmomentstoß, bei dem der Anstieg des Drehmoments des Radmontageelements 16 pro Zeiteinheit hinreichend groß ist, wird durch das Zusammenwirken von Fingerelementen 38, von Dämpfungselementen 39 und vom Radmontageelement 16 gedämpft, indem die Dämpfungselemente 39 verformt werden und damit Energie aufnehmen, welche auf die entsprechende Weise dem Drehmomentstoß entzogen wird. Dies führt zur Übertragung eines verringerten Drehmoments oder jedenfalls zur verzögerten Übertragung des Drehmoments auf die Antriebswelle 18. Die Antriebswelle 18, insbesondere der Schaftabschnitt 36 der Antriebswelle 18, kann so vor übermäßigen Torsionsspitzen geschützt werden.

Bei der dargestellten Nutzfahrzeugachse 10 können Drehmomentstöße in zwei entgegengesetzte Richtungen gedämpft werden. In jedem Fall drückt das Radmontageelement 16 infolge des Drehmomentstoßes so ruckartig gegen die Dämpfungselemente 39 zwischen dem Radmontageelement 16 und den Fingerelementen 38 des Kopfstücks 35 der Antriebswelle 18, dass diese zusammengedrückt, mithin elastisch deformiert, werden und der Drehmomentstoß nur abgeschwächt oder verzögert, also über einen längeren Zeitraum gestreckt, an die Antriebswelle 18 übertragen wird. Nach dem Abklingen des Drehmomentstoßes führt die Rückstellkraft der Dämpfungselemente 39 dazu, dass diese wieder in die Ausgangsstellung zurückkehren. Dabei drücken die Dämpfungselemente 39 auch die Fingerelemente 38 der Antriebswelle 18 in ihre Ausgangsstellungen zurück. Ein stoßfreier Drehmomentverlauf kann mithin bei entsprechend eingestellten bzw. ausgewählten Dämpfungselementen 39 quasi ungedämpft, also quasi torsionssteif, übertragen werden.

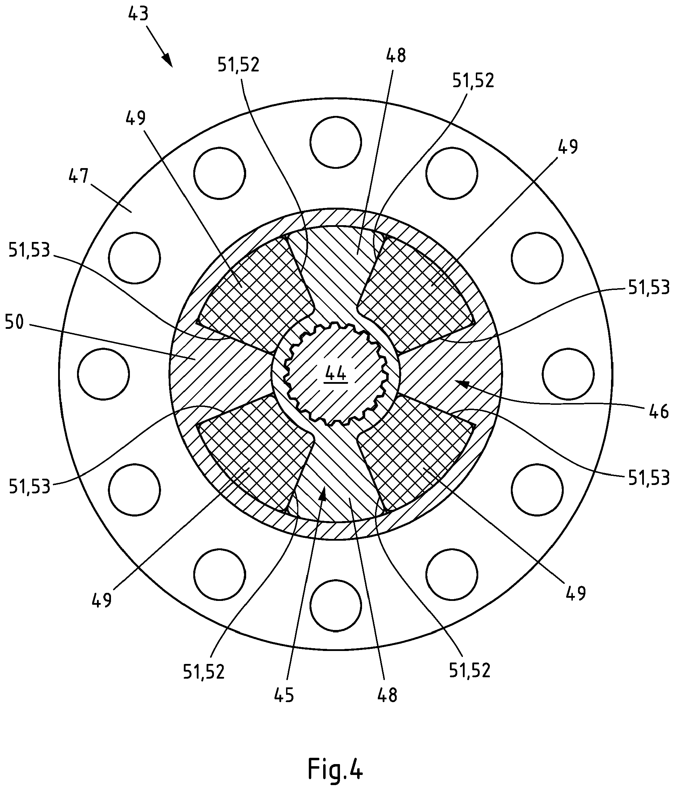

In der Fig. 4 ist eine ähnlich aufgebaute Nutzfahrzeugachse 43 dargestellt. Auch hier greift das äußere Ende der Antriebswelle 44 mit einem Kopfstück 45 durch einen zentralen Bereich 46 eines Radmontageelements 47 hindurch. Das Kopfstück 45 weist zudem ebenfalls sich radial nach außen erstreckende Fingerelemente 48 auf. Bei dem dargestellten und insoweit bevorzugten Ausführungsbeispiel sind es zwei Fingerelemente 48 die umfangsseitig verteilt sind und etwa in entgegengesetzte Richtungen weisen. Angrenzend zu beiden Seiten der Fingerelemente 48 sind jeweils Dämpfungselemente 49 vorgesehen, zwischen jeweils zwei dieser Dämpfungselemente 49 sind Anschlagnocken 50 des Radmontageelementes 47 vorgesehen. Jedenfalls wenn sich das Radmontageelement 47 infolge eines Drehmomentstoßes in der Drehrichtung der Antriebswelle 44 oder entgegengesetzt dazu gegenüber der Antriebswelle 44 hinreichend weit dreht, sind gegenüberliegenden Anlageflächen 51 der Dämpfungselemente 49 in Anlage an Anlageflächen 52 der Fingerelemente 48 der Antriebswelle 44 einerseits und in Anlage an Anlageflächen 53 der Anschlagnocken 50 des Radmontageelements 47 andererseits. Das Dämpfungselement 49 wird dann abhängig vom Drehmomentstoß verformt, um den Drehmomentstoß zu dämpfen und verringert oder jedenfalls verzögert an die Antriebswelle 44 zu übertragen. Dabei kann der zentrale Bereich 46 um die Fingerelemente 48, Anschlagsnocken 50 und die Dämpfungselemente 49 herum von einem Deckel 34 verdeckt und so zwischen dem Deckel und dem zentralen Bereich des Radmontageelements aufgenommen werden.

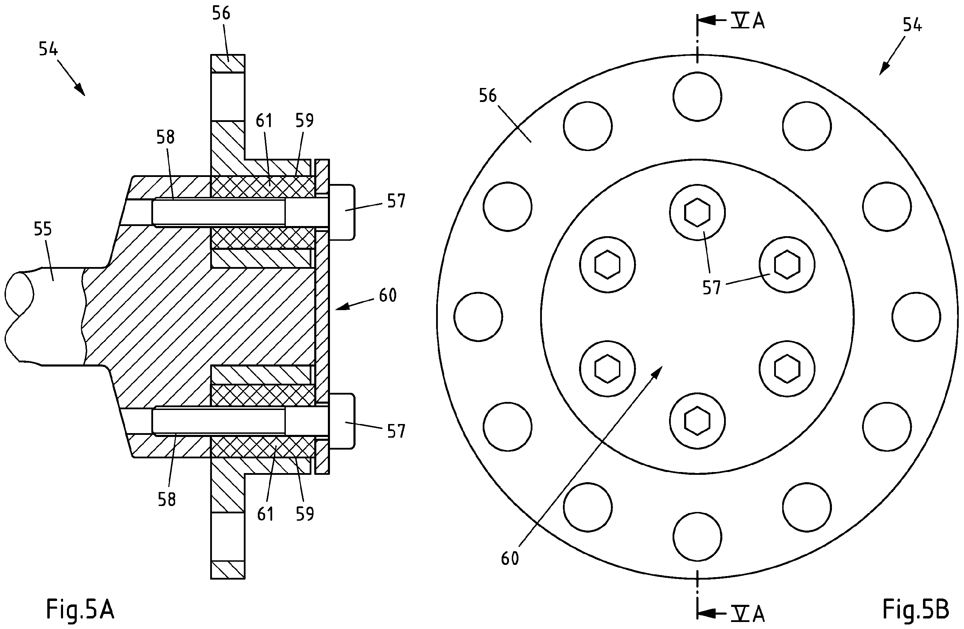

In den Fig. 5A-B ist ein Detail einer Nutzfahrzeugachse 54 in einer Schnittansicht und einer Draufsicht dargestellt, bei der die Antriebswelle 55 mit dem Radmontageelement 56 verschraubt ist. Die Schrauben 57 greifen dabei formschlüssig in Gewinde 58 der Antriebswelle 55 ein und sind durch Öffnungen 59 im zentralen Bereich 60 des Radmontageelements 56 hindurchgesteckt. In den Öffnungen 59 sind Dämpfungselemente 61 in Form von Hülsen aus einem elastisch deformierbaren Kunststoff oder Gummi vorgesehen, die von den Schrauben 57 durchgriffen werden. Durch diese Verbindung kann sich das Radmontageelement 56 geringfügig gegenüber der Antriebswelle 55 in der Drehrichtung der Antriebswelle 55 oder entgegengesetzt dazu drehen, wobei die Dämpfungselemente 61 verformt werden und so einen etwaigen Drehmomentstoß dämpfen können. Dies beruht auf den zuvor bereits grundsätzlich beschriebenen Prinzipien. Der zentrale Bereich 60 um die Verschraubung zwischen der Antriebswelle 55 und dem Radmontageelement 56 kann von einem Deckel 34 verdeckt und so zwischen dem Deckel 34 und dem zentralen Bereich 60 des Radmontageelements 56 aufgenommen werden.

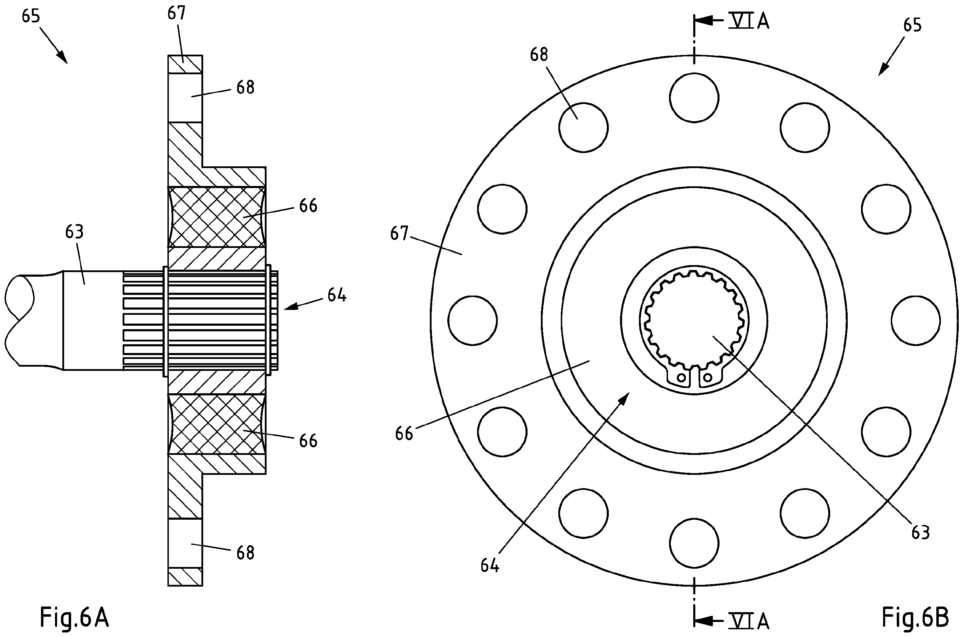

In den Fig. 6A-B ist ein Detail einer Nutzfahrzeugachse 62 in einer Schnittansicht und einer Draufsicht dargestellt, bei der die Antriebswelle 63 mit einem Ende formschlüssig in einen zentralen Bereich 64 des Radmontageelements 65 eingesteckt ist. Das Radmontageelement 65 weist umlaufend zur eingesteckten Antriebswelle 63 ein Dämpfungselement 66 in Form eines Rings aus einem elastisch verformbaren Kunststoff oder Gummi auf. An das Dämpfungselement 66 schließt sich außen ein Flanschabschnitt 67 zum Anbinden weiterer Baugruppen mit dem Radmontageelement 65 an. Hierzu weist der Flanschabschnitt 67 umlaufend vorgesehene Öffnungen 68 auf. Über das Dämpfungselement 66 kann sich das Radmontageelement 65 in der Drehrichtung der Antriebswelle 63 oder entgegengesetzt dazu etwas gegenüber der Antriebswelle 63 drehen. Dabei wird das Dämpfungselement deformiert. Aufgrund dessen kann das Dämpfungselement 66 einen etwaigen Drehmomentstoß dämpfen, wie dies grundsätzlich zuvor bereits beschrieben worden ist. Der zentrale Bereich um das Dämpfungselement 66 in der Verbindung zwischen der Antriebswelle 63 und dem Radmontageelement 65 herum kann von einem Deckel 34 verdeckt und so zwischen dem Deckel 34 und dem zentralen Bereich 64 des Radmontageelements 65 aufgenommen werden.

**Bezugszeichenliste**

| | | | |
|---|---|---|---|
| 1 | Nutzfahrzeug | 5 | Seitenwand |
| 2 | Dach | 6 | Rückwand |
| 3 | Stirnwand | 7 | Flügeltür |
| 4 | Seitenwand | 8 | Laderaum |
| 9 | Ladeboden | 42 | Anlagefläche |
| 10 | Nutzfahrzeugachse | 43 | Nutzfahrzeugachse |
| 11 | Rad | 44 | Antriebswelle |
| 12 | Transportkältemaschine | 45 | Kopfstück |
| 13 | Leitung | 46 | zentraler Bereich |
| 14 | Energiespeicher | 47 | Radmontageelement |
| 15 | Generator | 48 | Fingerelement |
| 16 | Radmontageelement | 49 | Dämpfungselement |
| 17 | Achskörper | 50 | Anschlagnocken |
| 18 | Antriebswelle | 51 | Anlagefläche |
| 19 | Getriebeeinheit | 52 | Anlagefläche |
| 20 | Generatorkoppelelement | 53 | Anlagefläche |
| 21 | Antriebswelle | 54 | Nutzfahrzeugachse |
| 22 | Planetengetriebe | 55 | Antriebswelle |
| 23 | Stirnradgetriebe | 56 | Radmontageelement |
| 24 | Zwischenwelle | 57 | Schraube |
| 25 | Hohlrad | 58 | Gewinde |
| 26 | Sonnenrad | 59 | Öffnung |
| 27 | Planetenrad | 60 | zentraler Bereich |
| 28 | Planetenträger | 61 | Dämpfungselement |
| 29 | Stirnrad | 62 | Nutzfahrzeugachse |
| 30 | Stirnrad | 63 | Antriebswelle |
| 31 | Flanschabschnitt | 64 | zentraler Bereich |
| 32 | Öffnung | 65 | Radmontageelement |
| 33 | zentraler Bereich | 66 | Dämpfungselement |
| 34 | Deckel | 67 | Flanschabschnitt |
| 35 | Kopfstück | 68 | Öffnung |
| 36 | Schaftabschnitt | | |
| 37 | Ring | AR | Raddrehachse |
| 38 | Fingerelement | RF | Fahrtrichtung |
| 39 | Dämpfungselemente | Z | Zugmaschine |
| 40 | Aufnahmeraum | | |
| 41 | Anlagefläche | | |

## Patentansprüche

1. Nutzfahrzeugachse (10,43,54,62) insbesondere eines Lastkraftwagens, Anhängers oder Sattelaufliegers, zum Antrieb eines Generators (15) mit einer Antriebswelle (18,44,5563) zum Antrieb des Generators (15), mit einem Achskörper (17) zur wenigstens abschnittsweisen Aufnahme der Antriebswelle (18,44,5563) und mit einem Radmontageelement (16,47,56,65) zur Montage eines nicht angetriebenen Rads (11), wobei das Radmontageelement (16,47,56,65) derart mit der Antriebswelle (18,44,5563) verbunden ist, so dass die Antriebswelle (18,44,5563) durch eine Drehung des Radmontageelements (16,47,56,65) antreibbar ist,
**dadurch gekennzeichnet, dass**
das Radmontageelement (16,47,56,65) in wenigstens einer Drehrichtung über wenigstens ein Dämpfungselement (39,49,61,66) torsionselastisch mit der Antriebswelle (18,44,5563) verbunden ist.

2. Nutzfahrzeugachse nach Anspruch 1,
**dadurch gekennzeichnet, dass**
das wenigstens eine Dämpfungselement (39,49,61,66) zwischen einer Ausgangsstellung und wenigstens einer Dämpfungsstellung verstellbar oder elastisch verformbar ist.

3. Nutzfahrzeugachse nach Anspruch 2,
**dadurch gekennzeichnet, dass**
das wenigstens eine Dämpfungselement (39) wenigstens ein Federelement, vorzugsweise wenigstens eine Blattfeder oder Tellerfeder, insbesondere wenigstens ein Blatt- oder Tellerfederpaket, aufweist.

4. Nutzfahrzeugachse nach Anspruch 2 oder 3,
**dadurch gekennzeichnet, dass**
das wenigstens eine Dämpfungselement (49,61,66) einen wenigstens indirekt zwischen Radmontageelement (47,56,65) und der Antriebswelle (44,5563) elastisch verformbaren Kunststoff oder Gummi aufweist und dass, vorzugsweise, das wenigstens eine Dämpfungselement (49,61,66) in Form einer Buchse, eines Ringes und/oder eines Blocks ausgebildet ist.

5. Nutzfahrzeugachse nach Anspruch 4,
**dadurch gekennzeichnet, dass**
durch die Buchse ein Verbindungmittel zum Verbinden des Radmontageelements mit der Antriebswelle (56) gesteckt ist und dass, vorzugsweise, das Verbindungsmittel eine Schraube (57) oder ein Bolzen ist.

6. Nutzfahrzeugachse nach einem der Ansprüche 1 bis 5,
**dadurch gekennzeichnet, dass**
das Radmontageelement (16,47,56,65) und die Antriebswelle (18,44,55,63) jeweils wenigstens eine Anlagefläche (41,52,53) zur Anlage an das wenigstens eine Dämpfungselement (39,49,61,66) aufweisen und dass, vorzugsweise, die Anlageflächen (41,52,53) von Radmontageelement (16,47,56,65) und Antriebwelle (18,44,55,63) jeweils auf gegenüberliegenden Seiten des Dämpfungselements (39,49,61,66) angeordnet sind.

7. Nutzfahrzeugachse nach Anspruch 6,
**dadurch gekennzeichnet, dass**
die wenigstens eine Anlagefläche (41,52,53) der Antriebswelle (18,44,55,63) und/oder des Radmontageelements (16,47,56,65) sich wenigstens im Wesentlichen in radialer Richtung zur Antriebswelle (18,44,55,63) erstrecken und dass, vorzugsweise, die wenigstens eine Anlagefläche (41,52) der Antriebswelle (18,44) an wenigstens einem sich wenigstens im Wesentlichen in radialer Richtung zur Antriebswelle (18,44) erstreckenden Fingerelement (38,48) vorgesehen ist.

8. Nutzfahrzeugachse nach Anspruch 7,
**dadurch gekennzeichnet, dass**
die Antriebswelle (18,44) eine Mehrzahl von Fingerelementen (38,48) aufweist und dass sich die Fingerelemente (38,48) gegenüber der Antriebswelle (18,44) wenigstens im Wesentlichen sternförmig nach außen erstrecken.

9. Nutzfahrzeugachse nach Anspruch 7 oder 8,
**dadurch gekennzeichnet, dass**
das wenigstens eine Dämpfungselement (39,49), vorzugsweise jeweils, zwischen zwei Fingerelementen (38,48) der Antriebswelle (18,44) vorgesehen ist und dass, vorzugsweise, das wenigstens eine Dämpfungselement (39,49) zwischen jeweils zwei Fingerelementen (38,48), insbesondere formschlüssig, am Radmontageelement (16,47) gehalten ist.

10. Nutzfahrzeugachse nach einem der Ansprüche 7 bis 9,
**dadurch gekennzeichnet, dass**
das wenigstens eine Dämpfungselement (39,49), vorzugsweise zusammen mit dem wenigstens einen, Fingerelement (38,48) zwischen einem Flanschabschnitt (31) des Radmontageelements (16,47) und einem Deckel (34) des Radmontageelements (16,47) aufgenommen sind.

11. Nutzfahrzeugachse nach einem der Ansprüche 1 bis 10,
**dadurch gekennzeichnet, dass**
die Steifigkeit des wenigstens einen Dämpfungselements (39,49,61,66) zwischen 0,01 kN/mm und 200 kN/mm, vorzugsweise zwischen 0,1 kN/mm und 100 kN/mm, insbesondere zwischen 0,7 kN/mm und 70 kN/mm, beträgt.

12. Nutzfahrzeugachse nach Anspruch 1 oder 11,
**dadurch gekennzeichnet, dass**
an dem wenigstens einen Radmontageelement (16,47,56,65) wenigstens ein Rad (11) montiert ist und dass, vorzugsweise, das Rad (11) mit einem Radflansch und der Radflansch mit einem Radmontageelement (16,47,56,65) verbunden ist.

13. Nutzfahrzeugachse nach Anspruch 1 oder 12,
**dadurch gekennzeichnet, dass**
die Antriebswelle (18,44,5563) mit einer Getriebeeinheit (19) der Nutzfahrzeugachse (10,43,54,62) verbunden ist und/oder dass von der Nutzfahrzeugachse (10,43,54,62) ein, vorzugsweise über die Getriebeeinheit (19), mit der Antriebswelle (18,44,5563verbundener Generator (15) umfasst ist.

14. Nutzfahrzeug (1), insbesondere Lastkraftwagen, Anhänger oder Sattelauflieger, mit wenigstens einer Nutzfahrzeugachse (10,43,54,62), wobei an den gegenüberliegenden Enden der Nutzfahrzeugachse (10,43,54,62) jeweils ein Radmontageelement (16,47,56,65) vorgesehen ist und dass das Radmontageelement (16,47,56,65) mit wenigstens einem Rad (11) verbunden ist,
**dadurch gekennzeichnet, dass**
die Nutzfahrzeugachse (10,43,54,62) nach einem der Ansprüche 1 bis 13 ausgebildet ist.
